# FASCICULE DE BREVET EUROPEEN

(11) **EP 0 952 369 B1**
(45) Date de publication et mention de la délivrance du brevet: **04.06.2003**
(21) Numéro de dépôt: 99400951.2
(22) Date de dépôt: 20.04.1999
(51) Int. Cl.: F16F 1/38, F16F 1/387

(54) **Manchon élastique à deux armatures; biellette de reprise de couple équipée d'un tel manchon**
Hülsengummifeder mit zwei Armaturen; Drehmomentenanlaufschwingarm mit solcher Hülse
Two-sleeve elastic bush; torque strut with such a bush

(30) Priorité: 21.04.1998 FR 9804962
(43) Date de publication de la demande: 27.10.1999
(73) Titulaire: HUTCHINSON, 75008 Paris (FR)
(72) Inventeur: Stahl, Manfred, 28200 Chateaudun (FR)
(74) Mandataire: Burbaud, Eric

(56) Documents cités:
- EP-A- 0 066 815
- EP-A- 0 723 091
- DE-U- 8 613 199
- FR-A- 2 118 585
- FR-A- 2 662 223

## Description

La présente invention concerne un manchon élastique comportant deux armatures rigides coaxiales au repos, à savoir une armature extérieure et une armature intérieure entre lesquelles s'étendent, essentiellement en direction radiale, un ensemble de bras élastiques angulairement équirépartis.

Il pourra s'agir par exemple, mais non exclusivement, de réaliser une extrémité de liaison, au moteur ou à la carrosserie, d'une biellette de reprise de couple dans un véhicule à moteur transversal.

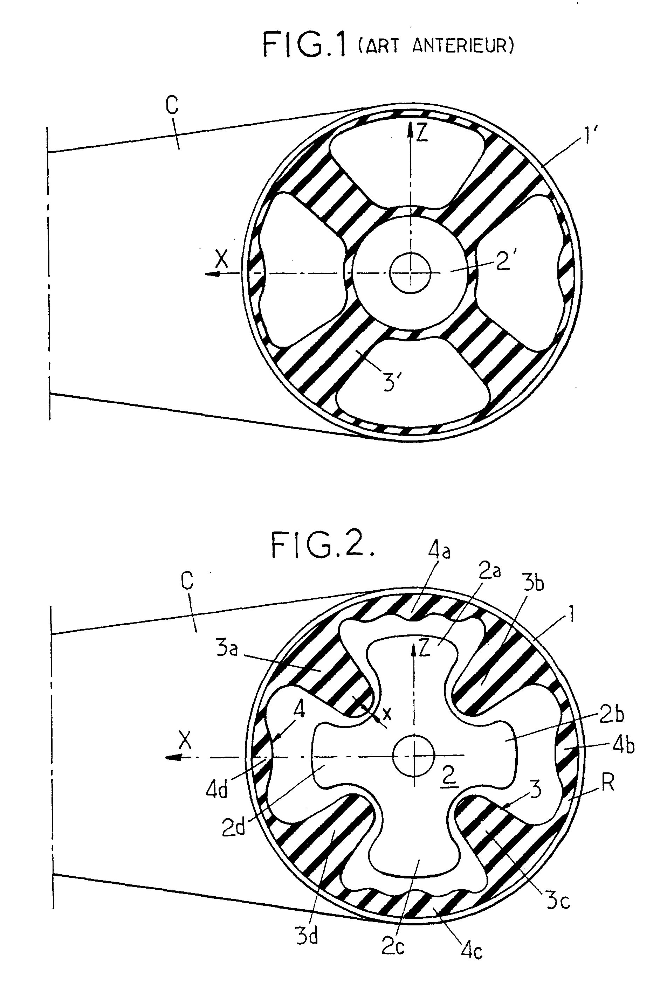

Un manchon de liaison destiné à une telle application est représenté à titre d'exemple, pour illustrer la technique antérieure, dans la vue en coupe transversale de la figure 1 du dessin ci-annexé.

Dans cette figure on a représenté une armature extérieure tubulaire en 1' et une armature intérieure également tubulaire, coaxiale à la précédente au repos, en 2'. Une liaison élastique entre ces deux armatures est assurée dans cet exemple par quatre bras en caoutchouc naturel ou synthétique 3' angulairement équirépartis et adhérisés par leurs extrémités, d'une part sur l'armature intérieure 2', d'autre part sur la face interne de l'armature extérieure 1'. En C on a représenté partiellement le corps d'une biellette de reprise de couple également classique, par exemple pour moteur transversal de véhicule.

Lorsque des efforts s'exercent axialement sur cette biellette, à savoir dans la direction de l'axe référencé X, ou dans la direction perpendiculaire des efforts verticaux représentée par l'axe Z, certains des bras 3' sont soumis à des efforts de traction qui sont préjudiciables à la tenue du manchon élastique en endurance. On tente d'y remédier en effectuant sur l'armature extérieure 1' un rétreint diminuant la traction qui s'exerce déjà sur les bras après démoulage, mais l'inconvénient mentionné subsiste.

Le but de la présente invention est d'y remédier, et d'éviter que les bras élastiques ne travaillent en traction en cours de fonctionnement.

A cet effet, un manchon élastique du type mentionné plus haut est caractérisé en ce que lesdits bras élastiques sont adhérisés, par leur base, seulement sur l'une desdites armatures, leur extrémité opposée à ladite base s'étendant entre deux saillies rigides voisines, à extension radiale, de l'autre armature.

De la sorte, chacun des bras élastiques ne peut être soumis qu'à des efforts de compression sous l'effet des efforts agissant dans les directions X et Z (ou sous l'effet de la résultante des mêmes efforts), tout en étant guidé et maintenu entre les deux saillies rigides voisines de l'autre armature. Les bras opposés à ceux qui subissent les efforts de compression ne subissent aucun effort. Ils ne subiront des efforts de compression que lors de l'inversion du déplacement relatif des deux armatures, et jamais aucun effort de traction.

On peut prévoir la présence ou au contraire l'absence d'un jeu entre ladite extrémité opposée de chaque bras élastique et ladite autre armature, les bras étant dans ce dernier cas avantageusement précontraints radialement par compression de ladite extrémité opposée contre ladite autre armature.

Pour un bon guidage radial des bras élastiques à chaque fois entre les deux saillies rigides voisines de l'autre armature, il est encore possible de prévoir que lesdites saillies rigides ont une extrémité libre élargie, comme les branches d'une Croix de Malte, alors que lesdits bras élastiques ont une section transversale qui se rétrécit en allant de leur base à leur extrémité opposée, ceci pour leur conférer l'élasticité voulue, en fonction de la charge.

Pour limiter la déformation du manchon sous les charges élevées, en outre, on peut prévoir que l'armature sur laquelle sont adhérisés lesdits bras élastiques comporte entre ces bras des butées vis-à-vis des extrémités libres desdites saillies rigides ; ceci est obtenu par exemple par le fait que sur l'armature sur laquelle sont adhérisés lesdits bras élastiques est adhérisé un revêtement de matériau élastique comportant des extensions radiales constituant alternativement lesdits bras élastiques et lesdites butées, les butées ayant bien entendu une étendue radiale notablement plus faible que celle des bras élastiques.

Les butées peuvent d'ailleurs avoir des épaisseurs différentes selon la direction (X ou Z) des efforts qu'elles sont destinées à supporter.

Les bras élastiques peuvent en principe être adhérisés sur l'armature intérieure ou sur l'armature extérieure, mais il sera préférable de prévoir que lesdits bras sont adhérisés, par leur base, seulement sur la face interne de ladite armature extérieure, leur extrémité opposée à ladite base s'étendant entre deux saillies rigides voisines, à extension radiale, de l'armature intérieure.

Un tel mode d'exécution de l'invention est représenté à titre d'exemple nullement limitatif avec référence à la figure 2 du dessin ci-annexé, qui est une vue en coupe transversale, analogue à celle de la figure 1, d'un manchon élastique conforme à l'invention, supposé constituer l'extrémité d'une biellette de reprise de couple, avec une armature intérieure (ou insert) constituée d'une pièce massive ;
- la figure 3 est un quart de vue en coupe transversale d'une armature intérieure en métal extrudé ;
- la figure 4a est une vue partielle en bout d'une armature intérieure massive ; et
- la figure 4b est une vue partielle de dessus de cette armature.

Sur la figure 2, et par analogie avec la figure 1, l'armature extérieure tubulaire a été référencée 1 et l'armature intérieure a été référencée 2. Cette armature intérieure est massive et comporte quatre saillies radiales 2 angulairement équiréparties, à extrémités élargies et référencées 2a, 2b, 2c et 2d. Les saillies 2a et 2c sont axées dans la direction Z et ont une étendue radiale légèrement supérieure à celle des saillies 2b et 2d qui sont axées dans la direction X, qui est celle de l'axe de la biellette, perpendiculaire à la direction Z, laquelle peut être supposée verticale.

Sur la face interne de l'armature extérieure 1 est adhérisé un revêtement R en matériau élastique, par exemple du caoutchouc naturel ou synthétique, présentant alternativement, d'une part des bras élastiques 3, référencés individuellement 3a, 3b, 3c et 3d, qui s'étendent radialement et dont la section transversale va en se rétrécissant vers leur extrémité libre, et d'autre part des butées 4, référencées individuellement 4a, 4b, 4c et 4d, se présentant comme des surépaisseurs localisées du revêtement R.

On voit que les bras élastiques s'étendent respectivement dans les espaces qui séparent deux saillies voisines de l'armature interne 2, avec, dans cet exemple, un faible jeu x entre l'extrémité de chaque bras et le creux ou partie de plus faible diamètre de cette armature intérieure. Toutefois, il est bien entendu que ce jeu x pourrait être nul ou même "négatif", ce qui signifierait dans ce dernier cas une mise en précontrainte des bras élastiques contre l'armature intérieure 2.

Quant aux butées 4, qui s'étendent respectivement en face des extrémités élargies des saillies 2, elles peuvent être de hauteurs différentes : les butées 4b et 4d, respectivement vis-à-vis des extrémités élargies des saillies 2b et 2d de l'armature intérieure 2 peuvent être moins épaisses que les butées 4a et 4c qui font face, respectivement, aux extrémités élargies des saillies plus longues 2a et 2c. Ainsi les déplacements relatifs, autorisés avant mise en butée, des armatures 1 et 2 sont plus importants dans la direction X des efforts anticouples de la biellette C que dans la direction verticale Z dans laquelle le manchon doit seulement encaisser les vibrations verticales dues aux inégalités de la chaussée.

Pour conférer plus de souplesse aux butées plus épaisses 4a et 4c, par ailleurs, on peut leur donner une surface ondulée, comme visible à la figure 2.

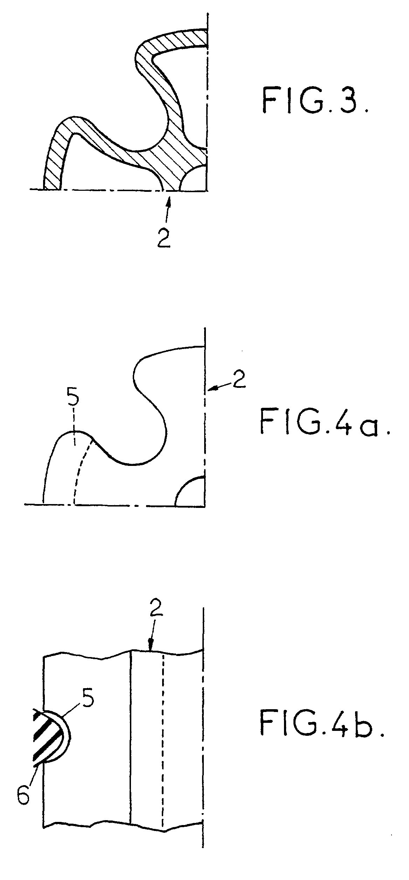

Sur la figure 3, on a montré que l'armature intérieure 2 pouvait être creuse et réalisée, par exemple, en métal extrudé.

Les figures 4a et 4b montrent quant à elles la possibilité de prévoir sur l'une des saillies de l'armature 2 une partie rentrante ou entaille 5 à extension axiale, dans laquelle peut venir se loger une partie saillante 6 du revêtement R, ce qui assure le maintien axial des armatures 1 et 2 l'une par rapport à l'autre. La disposition inverse pourrait aussi être prévue (partie rentrante sur le revêtement R de l'armature extérieure 1, partie saillante sur l'armature intérieure 2). On évite ainsi que l'armature intérieure 2, qui n'est pas solidarisée de l'armature extérieure 1, ne s'en échappe avant mise en place de la biellette.

## Revendications

1. Manchon élastique comportant deux armatures rigides, coaxiales au repos, à savoir une armature extérieure et une armature intérieure entre lesquelles s'étendent, essentiellement en direction radiale, un ensemble de bras élastiques angulairement équirépartis, **caractérisé en ce que** ces bras élastiques (3) sont adhérisés, par leur base, seulement sur l'une (1) desdites armatures, leur extrémité opposée à ladite base s'étendant entre deux saillies rigides voisines (2a à 2d), à extension radiale, de l'autre armature (2).

2. Manchon selon la revendication 1, **caractérisé par** la présence d'un jeu (x) entre ladite extrémité opposée de chaque bras (3) et ladite autre armature (2).

3. Manchon selon la revendication 1, **caractérisé par** l'absence de jeu entre ladite extrémité opposée de chaque bras (3) et ladite autre armature (2).

4. Manchon selon la revendication 3, **caractérisé en ce que** lesdits bras élastiques (3) sont précontraints radialement par compression de ladite extrémité opposée contre ladite autre armature (2).

5. Manchon selon l'une quelconque des revendications précédentes, **caractérisé en ce que** lesdites saillies rigides (2a à 2d) ont une extrémité libre élargie, comme les branches d'une Croix de Malte.

6. Manchon selon l'une quelconque des revendications précédentes, **caractérisé en ce que** lesdits bras élastiques (3) ont une section transversale qui se rétrécit en allant de leur base à leur extrémité opposée.

7. Manchon selon l'une quelconque des revendications précédentes, **caractérisé en ce que** l'armature (1) sur laquelle sont adhérisés lesdits bras élastiques (3) comporte entre ces bras des butées (4) vis-à-vis des extrémités libres desdites saillies (2a à 2d).

8. Manchon selon la revendication 7, **caractérisé en ce que** sur l'armature (1) sur laquelle sont adhérisés lesdits bras élastiques (3) est adhérisé un revêtement (R) de matériau élastique comportant des extensions radiales (3, 4) constituant alternativement lesdits bras élastiques et lesdites butées.

9. Manchon selon l'une quelconque des revendications précédentes, **caractérisé en ce que** lesdits bras élastiques (3) sont adhérisés, par leur base, seulement sur la face interne de ladite armature extérieure (1), leur extrémité opposée à ladite base s'étendant entre deux saillies rigides voisines (2a à 2d), à extension radiale, de l'armature intérieure (2).

10. Manchon selon l'une quelconque des revendications précédentes, **caractérisé en ce que** l'une (2) des armatures présente une partie rentrante (5) propre à coopérer avec une partie saillante (6) de l'autre armature (1) pour le maintien axial relatif des deux armatures (1, 2).

11. Biellette de reprise de couple équipée d'un manchon conforme à l'une quelconque des revendications précédentes, **caractérisée en ce que** ledit manchon comporte, sur l'une desdites armatures (2), deux saillies (2b, 2d) orientées dans la direction (X) de l'axe longitudinal de la biellette (C) et deux saillies (2a, 2c) orientées dans la direction (Z) perpendiculaire à la précédente.

12. Biellette selon la revendication 11, **caractérisée en ce que** les saillies (2b, 2d) orientées dans ladite direction (X) de l'axe longitudinal de la biellette (C) ont une extension radiale moindre que celle des saillies (2a, 2c) orientées dans la direction (Z) perpendiculaire à la précédente.

13. Biellette selon la revendication 11 ou 12, **caractérisée en ce que** les butées (4b, 4d) prévues vis-à-vis des extrémités libres des saillies correspondantes (2b, 2d) orientées dans la direction (X) de l'axe longitudinal de la biellette (C) sont moins épaisses que les butées (4a, 4c) prévues vis-à-vis des saillies correspondantes (2a, 2c) orientées dans la direction (Z) perpendiculaire à la précédente.

14. Biellette selon la revendication 13, **caractérisée en ce que** les butées (4a, 4c) prévues vis-à-vis des saillies correspondantes (2a, 2c) orientées dans la direction (Z) perpendiculaire à la précédente présentent une surface ondulée.

15. Biellette selon l'une quelconque des revendications 11 à 14, **caractérisée en ce que** lesdites saillies (2a à 2d) sont prévues sur l'armature intérieure (2), laquelle est creuse et obtenue par extrusion.

## Claims

1. Elastic bush including two rigid armatures which are coaxial when unstressed, namely an outer armature and an inner armature between which there extend, essentially in the radial direction, elastic arms which are equiangularly distributed, **characterized in that** the elastic arms (3) are bonded at their base to only one (1) of said armatures, their end opposite said base being between two adjoining rigid radial projections (2a to 2d) of the other armature (2).

2. Bush according to claim 1, **characterized by** the presence of a clearance (x) between said opposite end of each arm (3) and said other armature (2).

3. Bush according to claim 1, **characterized by** the absence of clearance between said opposite end of each arm (3) and said other armature (2).

4. Bush according to claim 3, **characterized in that** said elastic arms (3) are pre-stressed radially by compression of said opposite end against said other armature (2).

5. Bush according to any one of the preceding claims, **characterized in that** said rigid projections (2a to 2d) have an enlarged free end like the branches of a Maltese Cross.

6. Bush according to any one of the preceding claims, **characterized in that** said elastic arms (3) have a cross-section that decreases in size in the direction from their base to their opposite end.

7. Bush according to any one of the preceding claims, **characterized in that** the armature (1) to which said elastic arms (3) are bonded includes abutments (4) between the arms facing the free ends of said projections (2a to 2d).

8. Bush according to claim 7, **characterized in that** an elastic material lining (R) having radial extensions (3, 4) alternately constituting said elastic arms and said abutments is bonded to the armature (1) to which said elastic arms (3) are bonded.

9. Bush according to any one of the preceding claims, **characterized in that** said elastic arms (3) are bonded at their base only to the inside face of said outer armature (1), their end opposite said base being between two adjoining rigid radial projections (2a to 2d) of the inner armature (2).

10. Bush according to any one of the preceding claims, **characterized in that** one (2) of armatures has a re-entrant part (5) adapted to co-operate with a projecting part (6) of the other armature (1) for relative axial location of the two armatures (1, 2).

11. Torsion bar equipped with a bush according to any one of the preceding claims, **characterized in that** said bush includes, on one armature (2), two projections (2b, 2d) oriented in the direction (X) of the longitudinal axis of the bar (C) and two projections (2a, 2c) oriented in the direction (Z) perpendicular to the previous direction.

12. Bar according to claim 11, **characterized in that** said projections (2b, 2d) oriented in said direction (X) of the longitudinal axis of the bar (C) are smaller in the radial direction than the projections (2a, 2c) oriented in the direction (Z) perpendicular to the previous direction.

13. Bar according to claim 11 or claim 12, **characterized in that** the abutments (4b, 4d) facing the free ends of the corresponding projections (2b, 2d) oriented in the direction (X) of the longitudinal axis of the bar (C) are thinner than the abutments (4a, 4c) facing the corresponding projections (2a, 2c) oriented in the direction (Z) perpendicular to the previous direction.

14. Bar according to claim 13, **characterized in that** the abutments (4a, 4c) facing the corresponding projections (2a, 2c) oriented in the direction (Z) perpendicular to the previous direction have an undulating surface.

15. Bar according to any one of the claims 11 to 14, **characterized in that** said projections (2a to 2d) are on the inner armature (2), which is hollow and made by extrusion.

## Patentansprüche

1. Elastische Hülse mit zwei im Ruhezustand koaxialen, starren Armaturen, nämlich einer äußeren Armatur und einer inneren Armatur, zwischen denen sich, im wesentlichen in radialer Richtung, ein Satz von elastischen Armen erstreckt, die in gleichen Winkelabständen angeordnet sind, **dadurch gekennzeichnet, daß** diese elastischen Arme (3) über ihre Basis mit nur einer (1) der Armaturen haftend verbunden sind, und daß ihr der genannten Basis entgegengesetztes Ende zwischen zwei benachbarte, in radialer Richtung ausgedehnte, starre Vorsprünge (2a bis 2d) der anderen Armatur (2) ragt.

2. Hülse nach Anspruch 1, **dadurch gekennzeichnet, daß** zwischen dem genannten entgegengesetzten Ende jedes Arms (3) und der anderen Armatur (2) ein Spiel (x) vorhanden ist.

3. Hülse nach Anspruch 1, **dadurch gekennzeichnet, daß** zwischen dem genannten entgegengesetzten Ende jedes Arms (3) und der anderen Armatur kein Spiel vorhanden ist.

4. Hülse nach Anspruch 3, **dadurch gekennzeichnet, daß** die elastischen Arme (3) durch Kompression des genannten entgegengesetzten Endes gegen die andere Armatur (2) in radialer Richtung vorgespannt sind.

5. Hülse nach einem der vorhergehenden Ansprüche, **dadurch gekennzeichnet, daß** die freien Enden der starren Vorsprünge (2a bis 2d) sich nach Art der Arme eines Malteserkreuzes verbreitern.

6. Hülse nach einem der vorhergehenden Ansprüche, **dadurch gekennzeichnet, daß** der Querschnitt der elastischen Arme (3) sich von ihrer Basis zu ihrem entgegengesetzten Ende verjüngt.

7. Hülse nach einem der vorhergehenden Ansprüche, **dadurch gekennzeichnet, daß** die Armatur (1), mit der die elastischen Arme (3) haftend verbunden sind, zwischen diesen Armen Anschläge (4) aufweist, die den freien Enden der Vorsprünge (2a bis 2d) gegenüberliegen.

8. Hülse nach Anspruch 7, **dadurch gekennzeichnet, daß** mit der Armatur (1), an der die elastischen Arme (3) haftend angebracht sind, eine Auskleidung (R) aus elastischem Material haftend verbunden ist, die radiale Erweiterungen (3, 4) aufweist, die im Wechsel die elastischen Arme und die genannten Anschläge bilden.

9. Hülse nach einem der vorhergehenden Ansprüche, **dadurch gekennzeichnet, daß** die genannten elastischen Arme (3) über ihre Basis nur mit der innenfläche der äußeren Armatur (1) haftend verbunden sind und daß ihr der genannten Basis entgegengesetztes Ende zwischen zwei benachbarte, in radialer Richtung ausgedehnte, starre Vorsprünge (2a bis 2d) der inneren Armatur (2) ragt.

10. Hülse nach einem der vorhergehenden Ansprüche, **dadurch gekennzeichnet, daß** die eine (2) der Armaturen einen einspringenden Teil (5) aufweist, der für die relative axiale Halterung der beiden Armaturen (1, 2) mit einem vorspringenden Teil (6) der anderen Armatur (1) zusammenwirken kann.

11. Drehmomentstab, der mit einer Hülse nach einem der vorhergehenden Ansprüche ausgestattet ist, **dadurch gekennzeichnet, daß** die Hülse an einer (2) der beiden Armaturen zwei Vorsprünge (2b, 2d) aufweist, die in Richtung (X) der Längsachse des Stabs (C) orientiert sind, sowie zwei Vorsprünge (2a, 2c), die in der zu vorangehenden Richtung senkrechten Richtung (Z) orientiert sind.

12. Stab nach Anspruch 11, **dadurch gekennzeichnet, daß** die in Richtung (X) der Längsachse des Stabs (C) orientierten Vorsprünge (2b, 2d) eine radiale Ausdehnung haben, die kleiner ist als die der Vorsprünge (2a, 2c), die in der zu vorangehenden Richtung senkrechten Richtung (Z) orientiert sind.

13. Stab nach Anspruch 11 oder 12, **dadurch gekennzeichnet, daß** die den freien Enden der entsprechenden, in der Richtung (X) der Längsachse des Stabs (C) gegenüberliegenden Anschläge (4b, 4d) weniger dick sind als die Anschläge (4a, 4c), die den entsprechenden, in der zu der vorangehenden Richtung senkrechten Richtung (Z) orientierten Vorsprüngen (2a, 2c) gegenüberliegen.

14. Stab nach Anspruch 13, **dadurch gekennzeichnet, daß** die den entsprechenden, in der zu der vorangehenden Richtung senkrechten Richtung (Z) orientierten Vorsprüngen (2a, 2c) gegenüberliegenden Anschläge (4a, 4c) eine gewellte Oberfläche haben.

15. Stab nach einem der vorhergehenden Ansprüche, **dadurch gekennzeichnet, daß** die Vorsprünge (2a bis 2d) an der inneren Armatur (2) vorgesehen sind, die hohl ist und durch Extrudieren hergestellt ist.
